# EUROPÄISCHE PATENTSCHRIFT

(11) **EP 1 000 982 B1**
(45) Veröffentlichungstag und Bekanntmachung des Hinweises auf die Patenterteilung: **02.04.2003**
(21) Anmeldenummer: 99121805.8
(22) Anmeldetag: 04.11.1999
(51) Int. Cl.: C09B 67/22

(54) **Farbstoffmischungen von faserreaktiven Azofarbstoffen und ihre Verwendung**
Mixtures of reactive azo dyes and their use
Mélanges de colorants azoiques réactifs et leur utilisation

(30) Priorität: 09.11.1998 DE 19851497
(43) Veröffentlichungstag der Anmeldung: 17.05.2000
(73) Patentinhaber: DyStar Textilfarben GmbH & Co. Deutschland KG, 65926 Frankfurt am Main (DE)
(72) Erfinder: Schumacher, Christian, Dr., 65779 Kelkheim (DE); Gröbel, Bengt-Thomas, Dr., 65529 Waldems (DE); Eden, Birgit, 65929 Frankfurt am Main (DE); Schaffeld, Mieke, 65520 Bad Camberg (DE); Krieger, Karl, 65510 Hünstetten (DE); Röhrig, Dierk, Jl.Jen. Gatot Subroto, Jakarta 12040 (ID)

(56) Entgegenhaltungen:
- EP-A- 0 053 750
- EP-A- 0 073 481
- EP-A- 0 126 265
- EP-A- 0 668 328
- EP-A- 0 681 007
- EP-A- 0 731 145
- EP-A- 0 735 112
- DE-A- 2 605 620
- DE-A- 3 801 112
- DE-C- 4 139 954

## Beschreibung

Die Erfindung liegt auf dem technischen Gebiet der faserreaktiven Azofarbstoffe.

Aus der japanischen Patentanmeldungs-Veröffentlichung Hei-1-170 661 sind Mischungen von gelbfärbenden Monoazofarbstoffen mit einer faserreaktiven Gruppe der Vinylsulfonreihe bekannt, die jedoch anwendungstechnische Mängel aufweisen.

Auch bei der Anwendung von Farbstoffmischungen ist es wichtig, Färbungen mit guter Farbausbeute zu erhalten, d. h. Färbungen, deren Farbtiefe im Verhältnis zu eingesetzter Farbstoffmenge aufgrund der Farbeigenschaft der Farbstoffmischung und aufgrund deren färberischen Verhaltens, wie gutes Ausziehvermögen und hoher Fixierwert, möglichst hoch ist. in der Regel ist die Farbausbeute, die mit einer Farbstoffmischung aus zwei Farbstoffen erhalten wird, das Mittel der Summe der Farbausbeuten der Einzelfarbstoffe. Die Farbausbeute einer Mischung von zwei Farbstoffen wird deshalb geringer sein als die Farbausbeute desjenigen Einzelfarbstoffes mit der größeren Farbausbeuteeigenschaft.

Mit der vorliegenden Erfindung wurden nunmehr Farbstoffmischungen gefunden, die Färbungen mit einer Farbausbeute liefern, die überraschenderweise deutlich höher liegt als das Mittel der Summe der Farbausbeuten der Färbungen der Einzelfarbstoffe der Farbstoffmischung. Dieser synergistische Effekt zeigt sich zudem in einem verbesserten Aufbauverhalten der erfindungsgemäßen Mischung gegenüber den einzelnen Farbstoffen der Mischung.

Die Erfindung betrifft somit Farbstoffmischungen, die einen oder mehrere, wie zwei oder drei, bevorzugt 1 oder 2, Farbstoffe der nachstehend angegebenen und definierten allgemeinen Formel (1) und einen oder mehrere, wie zwei oder drei, bevorzugt 1 oder 2, Farbstoffe der nachstehend angegebenen und definierten allgemeinen Formel (2a) oder (2b) oder (2a) und (2b) in einem molaren Verhältnis der Farbstoffe (1) zu den Farbstoffen (2a) oder (2b) oder einer Kombination aus den Farbstoffen (2a) und (2b) von 70 : 30 bis 30 : 70, vorzugsweise von 60 : 40 bis 40 : 60, enthalten: 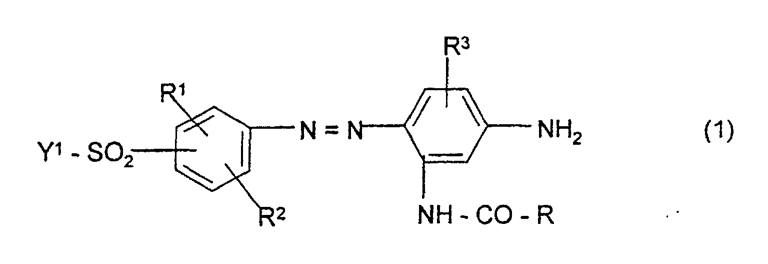 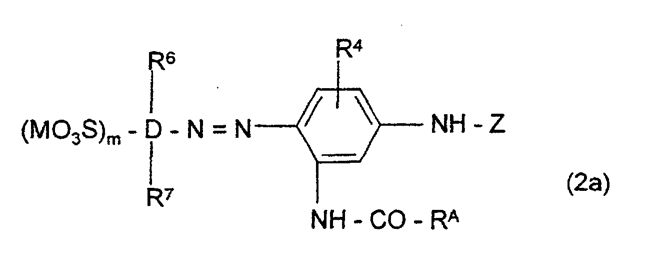 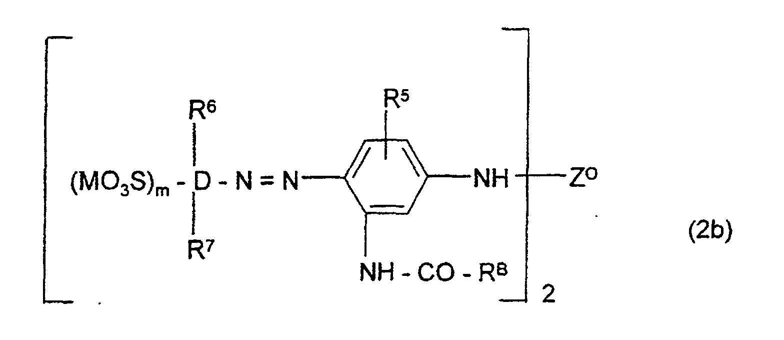 in welchen bedeuten:
- M: ist Wasserstoff oder ein Alkalimetall, wie Natrium, Kalium oder Lithium;
- Y¹: ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- D: ist der Rest des Benzols oder Naphthalins;
- R¹: ist Wasserstoff, Chlor, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl und Methoxy und insbesondere Wasserstoff;
- R²: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, bevorzugt Wasserstoff, Methyl und Methoxy und insbesondere Wasserstoff;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl, Methoxy und Sulfo und insbesondere bevorzugt Sulfo, wobei die Gruppe R³ bevorzugt in para-Stellung zur Gruppe -NH-CO-R steht;
- R⁴: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl, Methoxy und Sulfo und insbesondere bevorzugt Wasserstoff, wobei die Gruppe R⁴ bevorzugt in para-Stellung zur Gruppe -NH-CO-R^{A} steht;
- R⁵: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl, Methoxy und Sulfo und insbesondere bevorzugt Wasserstoff, wobei die Gruppe R⁵ bevorzugt in para-Stellung zur Gruppe -NH-CO-R^{B} steht;
- R: ist Amino oder Alkyl von 1 bis 6 C-Atomen, bevorzugt von 1 bis 3 C-Atomen, wie Ethyl und insbesondere Methyl, wobei das Alkyl substituiert sein kann, wie beispielsweise durch Hydroxy, Sulfo, Carboxy, Sulfato, Phosphato oder eine Gruppe -SO₂-Y² mit Y² einer Bedeutung von Y¹, und ist bevorzugt Methyl;
- R^{A}: ist Amino oder Alkyl von 1 bis 4 C-Atomen, wie Methyl, oder durch Carboxy, Sulfo oder eine Gruppe -SO₂-Y³ substituiertes Alkyl von 1 bis 4 C-Atomen, wobei Y³ eine der Bedeutungen von Y¹ hat, und ist bevorzugt Amino;
- R^{B}: ist Amino oder Alkyl von 1 bis 4 C-Atomen, wie Methyl, oder durch Carboxy, Sulfo oder eine Gruppe -SO₂-Y³ substituiertes Alkyl von 1 bis 4 C-Atomen, wobei Y³ eine der Bedeutungen von Y¹ hat, und ist bevorzugt Amino;
- R⁶: ist Wasserstoff, Alkyl von 1 bis 4 C-Atomen, wie Ethyl und insbesondere Methyl, Alkoxy von 1 bis 4 C-Atomen, wie Ethoxy und insbesondere Alkoxy, Hydroxy, Halogen, wie Chlor, Carboxy oder Cyano, bevorzugt Wasserstoff;
- R⁷: ist Wasserstoff, Alkyl von 1 bis 4 C-Atomen, wie Ethyl und insbesondere Methyl oder Alkoxy von 1 bis 4 C-Atomen, wie Ethoxy und insbesondere Alkoxy, bevorzugt Wasserstoff;
- m: ist die Zahl 1, 2 oder 3, bevorzugt 2 oder 3;
- Z: ist ein faserreaktiver Rest aus der Reihe der Halogenpyrimidine, wie der Difluor- oder Trifluor- oder Chlor-fluor- oder Chlor-difluorpyrimidine, der Dichlorchinoxaline oder der gegebenenfalls durch eine Ether- oder Aminogruppierung substituierten Halogentriazine, wie der Chlor- oder Fluortriazine, wobei der Rest des Halogentriazins auch mit einer faserreaktiven Gruppe der allgemeinen Formel -SO₂-Y mit Y gleich einer Bedeutung von Y¹ verbunden sein kann, die über ein Brückenglied, wie beispielsweise Phenylen, durch Methyl, Ethyl, Methoxy, Ethoxy und/oder Chlor substituiertes Phenylen, Alkylen von 1 bis 6 C-Atomen oder Alkylen von 3 bis 6 C-Atomen, das durch 1 oder 2 Heterogruppen, wie -O- und/oder -NH-, unterbrochen ist, oder eine Kombination dieser Gruppen, an eine an den Triazinrest gebundene Aminogruppe gebunden ist;
- Z°: ist ein bivalenter Rest der allgemeinen Formel (3) 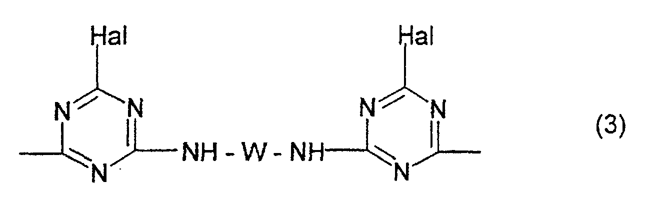
in welcher
- Hal: für Chlor oder Fluor steht und
- W: Phenylen, Alkylen, Phenylen-alkylen-phenylen, Phenylen-alkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen, bevorzugt aus 2 bis 4 C-Atomen, bestehen und durch Sulfo oder Carboxy substituiert und/oder durch 1 oder 2 Heterogruppen, wie -O- und -NH-, unterbrochen sein können, die Alkenylenreste solche von 2 bis 4 C-Atomen, bevorzugt der Vinyliden-Rest, sind, phen gleich Phenylen der obigen Bedeutung ist und G eine Gruppe -O-, -NH- , -CO- oder -NH-CO-NH- ist, bevorzugt Alkylen von 1 bis 6 C-Atomen, wie 1,2-Ethylen und 1,3-Propylen, und bevorzugt gegebenenfalls substituiertes Phenylen, wie 1,4-Phenylen, 2-Sulfo-1,4-phenylen, 1,3-Phenylen und 4-Sulfo-1,3-phenylen, ist.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Im nachfolgenden können die Farbstoffe der allgemeinen Formel (1) pauschal als "Farbstoffe (1)" und die Farbstoffe der allgemeinen Formeln (2a) und (2b) pauschal als "Farbstoffe (2)" bezeichnet werden. Sie sind allgemein bekannt und in deutschen, europäischen und britischen Patentanmeldungs-Veröffentlichungen und U.S.- und GB-Patentschriften beschrieben oder können analog den dort gemachten Angaben hergestellt werden.

In den Farbstoffen der allgemeinen Formel (2a) ist der Formelrest Z bevorzugt ein Rest der allgemeinen Formel (4a), (4b), (4c) oder (4d) 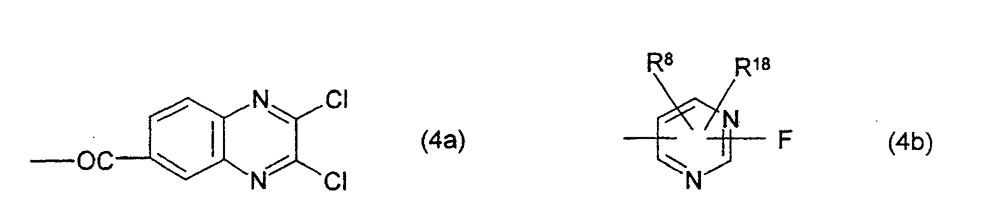 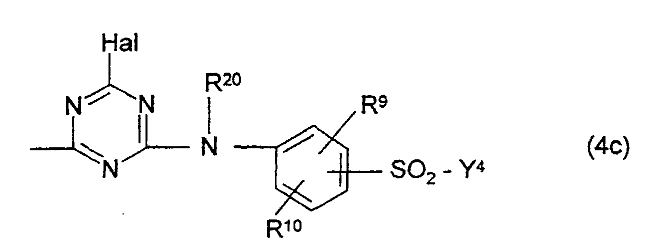 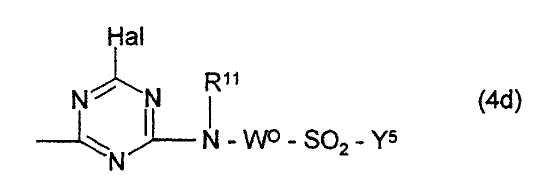 in welchen bedeuten:
- Hal: hat eine der obengenannten Bedeutungen;
- R⁸: ist Wasserstoff, Chlor oder Fluor, bevorzugt Chlor oder Fluor;
- R¹⁸: ist Wasserstoff oder Fluor, bevorzugt Fluor;
- R⁹: ist Wasserstoff, Alkyl von 1 bis 4 C-Atomen, wie Methyl oder Ethyl, oder Alkoxy von 1 bis 4 C-Atomen, wie Methoxy oder Ethoxy, bevorzugt Wasserstoff, Methoxy oder Methyl, insbesondere Wasserstoff;
- R¹⁰: ist Wasserstoff, Alkyl von 1 bis 4 C-Atomen, wie Methyl oder Ethyl, oder Alkoxy von 1 bis 4 C-Atomen, wie Methoxy oder Ethoxy, bevorzugt Wasserstoff oder Methoxy, insbesondere Wasserstoff;
- R²⁰: ist Wasserstoff oder Alkyl von 1 bis 4 C-Atomen, wie Methyl und Ethyl, bevorzugt Wasserstoff;
- R¹¹: ist Wasserstoff, Alkyl von 1 bis 4 C-Atomen, wie Methyl oder Ethyl, Phenyl oder durch Chlor, Sulfo, Methyl oder Carboxy substituiertes Phenyl und ist bevorzugt Wasserstoff, Methyl, Ethyl oder Phenyl;
- Y⁴: hat eine der für Y¹ genannte Bedeutungen;
- Y⁵: hat eine der für Y¹ genannte Bedeutungen;
- W°: ist Alkylen von 1 bis 4 C-Atomen, insbesondere n-Ethylen und n-Propylen, oder ist Alkylen von 3 bis 6 C-Atomen, das durch 1 oder 2 Heterogruppen aus der Gruppe der Formeln -O- und -NH- unterbrochen ist, wie eine Gruppe der Formel -(CH₂)₂-O-(CH₂)₂-, oder ist ein Rest der Formel ALK-PHEN oder PHEN-ALK oder PHEN , in welchen ALK Methylen, n-Ethylen oder n-Propylen, bevorzugt Methylen oder n-Ethylen, bedeutet, und PHEN Phenylen ist, das durch 1 oder 2 Substituenten aus der Gruppe Sulfo, Alkyl von 1 bis 4 C-Atomen, wie Ethyl und insbesondere Methyl, und Alkoxy von 1 bis 4 C-Atomen, wie Ethoxy und insbesondere Methoxy, substituiert sein kann und bevorzugt unsubstituiertes Phenylen ist.

Von den Halogen-pyrimidin-Resten der allgemeinen Formel (4b) sind insbesondere solche der allgemeinen Formel (4e) und (4f) 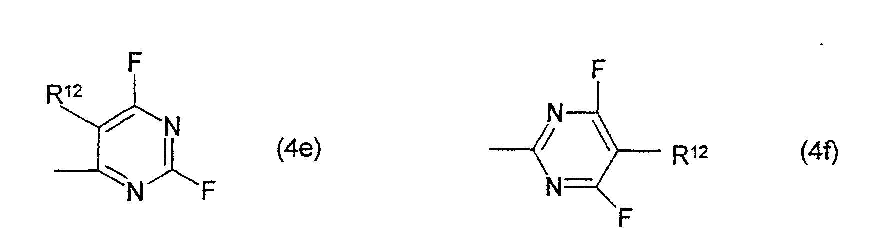 hervorzuheben, in welchen R¹² Wasserstoff oder Chlor bedeutet, hiervon insbesondere 5-Chlor-2,6-difluor-pyrimidin-4-yl, 2,6-Difluor-pyrimidin-4-yl und 4,6-Difluor-pyrimidin-2-yl.

In der allgemeinen Formel (1) ist die Gruppe -SO₂-Y¹ bevorzugt in meta- und insbesondere bevorzugt para-Stellung zur Azogruppe an den Benzolkern gebunden; ebenso steht in Formel (4c) die Gruppe -SO₂-Y⁴ im Benzolkern bevorzugt in meta- oder para-Stellung zur Gruppe NH. Ist in der allgemeinen Formel (4d) die Gruppe -SO₂-Y⁵ an einen Benzolkern von W° gebunden, so befindet sich diese bevorzugt in meta-Stellung oder para-Stellung zur Gruppe -N(R¹¹)- und insbesondere bevorzugt in para-Stellung zum Alkylenrest, falls W° den Rest ALK-PHEN bedeutet.

Die Reste (MO₃S)ₘ-D(R⁶,R⁷)- in den Farbstoffen (2) sind bevorzugt Monosulfophenyl, Disulfo-phenyl, Disulfo-naphth-2-yl und Trisulfo-naphth-2-yl, hiervon bevorzugt 2-Sulfo-phenyl, 2,5-Disulfo-phenyl, 2,4-Disulfo-phenyl, 3,6,8-Trisulfonaphth-2-yl, 4,8-Disulfo-naphth-2-yl, 1,5-Disulfo-naphth-2-yl, 4,6,8-Trisulfonaphth-2-yl und 5,7-Disulfo-naphth-2-yl.

Von den in den erfindungsgemäßen Farbstoffmischungen enthaltenen Farbstoffen der allgemeinen Formel (1) sind insbesondere diejenigen hervorzuheben, bei denen die Gruppe Y¹-SO₂- in meta- und insbesondere bevorzugt in para-Stellung zur Azogruppe steht, Y¹ Vinyl und bevorzugt β-Sulfatoethyl ist, R¹ und R² beide Wasserstoff bedeuten, R³ Sulfo ist und.in para-Stellung zur Gruppe -NH-CO-R an den Benzolkern gebunden ist und R Methyl bedeutet.

In den erfindungsgemäßen Farbstoffmischungen sind bevorzugt von den Farbstoffen der allgemeinen Formel (2a) solche enthalten, in welchen D den Rest des Naphthalins bedeutet, R⁶ und R⁷ beide Wasserstoff sind und m die Zahl 3 ist, hiervon der Rest (MO₃S)ₘ-D(R⁶,R⁷)- bevorzugt 3,6,8-Trisulfo-naphth-2-yl ist, R^{A} Amino bedeutet und Z eine der obengenannten, insbesondere bevorzugten, Bedeutungen besitzt, des weiteren solche, in welchen der Rest (MO₃S)ₘ-D(R⁶,R⁷)- Disulfophenyl ist, bevorzugt hiervon 2,5-Disulfo-phenyl ist, R^{A} Amino ist und Z eine der obengenannten, insbesondere bevorzugten, Bedeutungen hat, und des weiteren solche, in denen der Rest (MO₃S)ₘ-D(R⁶,R⁷)- einen Disulfonaphthyl-Rest bedeutet, bevorzugt 4,8-Disulfonaphth-2-yl ist, R^{A} Amino bedeutet und Z eine der obengenannten, insbesondere bevorzugten, Bedeutungen besitzt.

In den erfindungsgemäßen Farbstoffmischungen sind bevorzugt von den Farbstoffen der allgemeinen Formel (2b) solche enthalten, in welchen D den Rest des Naphthalins bedeutet, R⁶ und R⁷ beide Wasserstoff sind und m die Zahl 3 ist, hiervon der Rest (MO₃S)ₘ-D(R⁶,R⁷)- bevorzugt 3,6,8-Trisulfo-naphth-2-yl ist, R^{B} Amino bedeutet und Z eine der obengenannten, insbesondere bevorzugten, Bedeutungen besitzt, des weiteren solche, in welchen der Rest (MO₃S)ₘ-D(R⁶,R⁷)- Disulfophenyl ist, bevorzugt hiervon 2,5-Disulfo-phenyl ist, R^{B} Amino ist und Z eine der obengenannten, insbesondere bevorzugten, Bedeutungen hat, und des weiteren solche, in denen der Rest (MO₃S)ₘ-D(R⁶,R⁷)- einen Disulfonaphthyl-Rest bedeutet, bevorzugt 4,8-Disulfonaphth-2-yl ist, R^{B} Amino bedeutet und Z eine der obengenannten, insbesondere bevorzugten, Bedeutungen besitzt.

Die Farbstoffe (1) können, insbesondere bei gleichem Chromophor, innerhalb der Bedeutung von Y¹ und Y² unterschiedliche faserreaktive Gruppen -SO₂-Y¹ bzw. -SO₂-Y² besitzen (gleiches gilt auch für die Farbstoffe (2) bezüglich Y, Y³, Y⁴ und Y⁵). Insbesondere können die Farbstoffmischungen Farbstoffe (1) gleichen Chromophors und/oder Farbstoffe (2) gleichen Chromophors enthalten, in denen die faserreaktiven Gruppen -SO₂-Y¹ (bzw. -SO₂-Y², -SO₂-Y, -SO₂-Y³, -SO₂-Y⁴ und -SO₂-Y⁵) zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Enthalten die Farbstoffgemische die jeweiligen Farbstoffkomponenten teilweise als Farbstoff mit der Vinylsulfonylgruppe, so liegt der Farbstoffanteil des jeweiligen Farbstoffes mit der Vinylsulfonylgruppe bis zu etwa 30 Mol-%, bezogen auf den jeweiligen Farbstoffchromophor, vor.

Gruppen entsprechend der allgemeinen Formel (6a), (6b) und (6c) 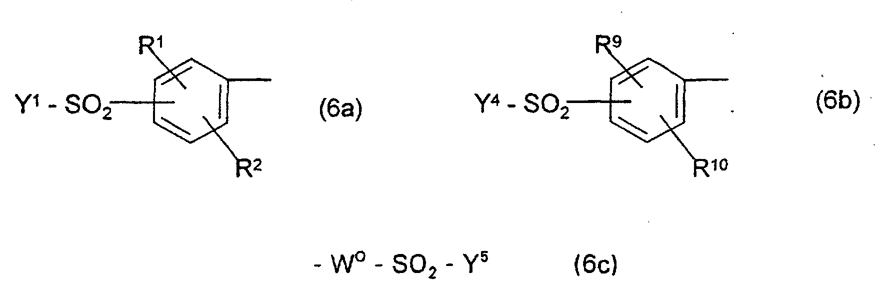 die in den Farbstoffen (1) und (2) enthalten sind oder sein können, sind beispielsweise 3-(β-Sulfatoethylsulfonyl)-phenyl, 4-(β-Sulfatoethylsulfonyl)-phenyl, 2-Methyl-5-(ß-sulfatoethylsulfonyl)-phenyl, 2-Methoxy-5-(β-sulfatoethylsulfonyl)-phenyl, 4-Methyl-3-(ß-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 2-Methoxy-4-(ß-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(ß-sulfatoethylsulfonyl)-phenyl, 2,5-Dimethoxy-4-(β-sulfatoethylsulfonyl)-phenyl und 2-Sulfo-4-(ß-sulfatoethylsulfonyl)-phenyl, hiervon insbesondere 3- oder 4-(β-Sulfatoethylsulfonyl)-phenyl, sowie deren Derivate, in welchen die β-Sulfatoethylsulfonyl-Gruppe durch die Vinylsulfonyl- oder β-Thiosulfato-ethylsulfonyl- oder β-Chlorethylsulfonyl-Gruppe ausgetauscht ist.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 10 bis 80 Gew.-%, bezogen auf die enthaltene Präparation, enthalten. Die Puffersubstanzen liegen in der Regel in einer Gesamtmenge von bis zu 5 Gew.-%, bezogen auf die Präparation, vor. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können weitere faserreaktive Farbstoffe, die zum Nuancieren der Farbstoffmischung dienen, in einer Menge von bis zu 5 Gew.-% enthalten. Diese "Nuancierfarbstoffe" können durch übliches Vermischen hinzugefügt oder aber auch auf chemischem Wege im selben Reaktionsansatz zusammen mit der oben beschriebenen Synthese einer erfindungsgemäßen Farbstoffmischung hergestellt und in die Farbstoffmischung eingebracht werden, wenn eine oder mehrere der Komponenten des Nuancierfarbstoffes mit den Komponenten der Farbstoffe der Formeln (1) und/oder (2) identisch sind.

Die erfindungsgemäßen Farbstoffmischungen besitzen wertvolle anwendungstechnische Eigenschaften. Sie werden zum Färben, wie bspw. auch Bedrucken, von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben, wie bspw. auch Bedrucken, dieser Materialien bzw. Verfahren zum Färben solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie bspw. in den PCT-Patentanmeldungs-Veröffentlichungen Nrs. WO 96/37641 und WO 96/37642 sowie in den europäischen Patentanmeldungs-Veröffentlichungen Nrs. 0 538 785 und 0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, bspw. im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasem ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, bspw. mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie bspw. Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine höhe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, gelbe Färbungen mit guten Echtheitseigenschaften und geringer Photochromie.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen werden im allgemeinen in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, genannten Ausgangsverbindungen in Form der freien Säure oder in Form ihrer Salze, vorzugsweise Alkalimetallsalze, wie Natrium- oder Kaliumsalze, in die Synthese eingesetzt werden.

### Beispiel 1

1000 Teile einer wäßrigen Lösung mit 150 Teilen des nachstehend angegebenen Farbstoffes der Formel (A-1), wie eine Syntheselösung dieses Farbstoffes, und 1000 Teile einer wäßrigen Lösung mit 150 Teilen des nachstehend angegebenen Farbstoffes der Formel (B-1), wie einer Syntheselösung dieses Farbstoffes 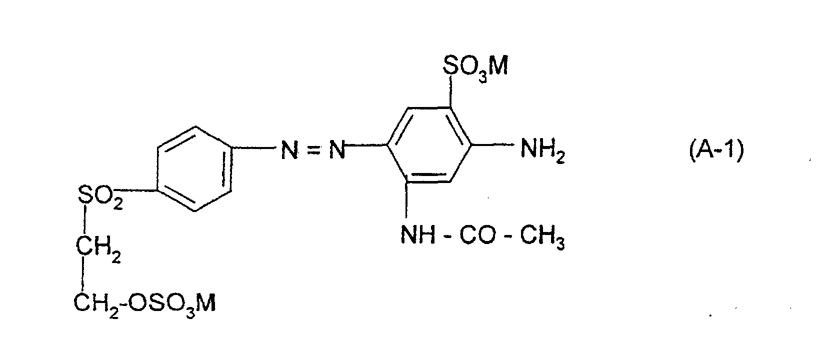 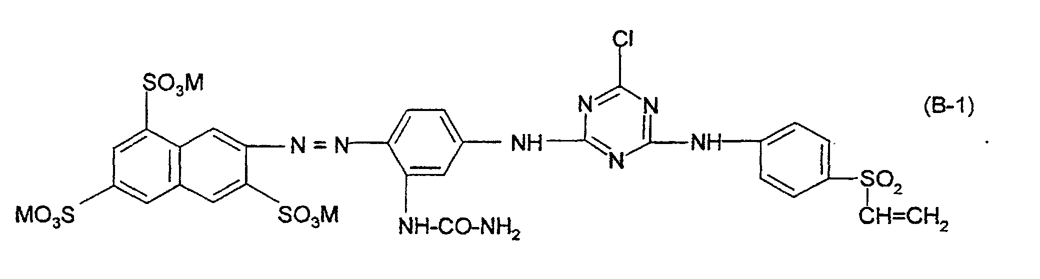 (mit M der obengenannten Bedeutung, bevorzugt Natrium) werden miteinander vermischt.
Man isoliert die erfindungsgemäße Farbstoffmischung in einem molaren Mischungsverhältnis des Farbstoffes (A-1) zu Farbstoff (B-1) von 58 : 42 aus der vereinigten Lösung in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung zeigt sehr gute färberische Eigenschaften und liefert beispielsweise auf cellulosischen Fasermaterialien, wie Baumwolle, oder Celluloseregeneratfasern in einem für faserreaktive Farbstoffe üblichen Auszieh-Färbeverfahren farbstarke und egale gelbe Färbungen.

### Beispiel 2

Man vermischt 1000 Teile einer wäßrigen Syntheselösung mit 59 Teilen des Farbstoffes der in Beispiel 1 genannten Formel (A-1) mit 500 Teilen einer wäßrigen Syntheselösung mit 63,5 Teilen des Farbstoffes der Formel (B-2) 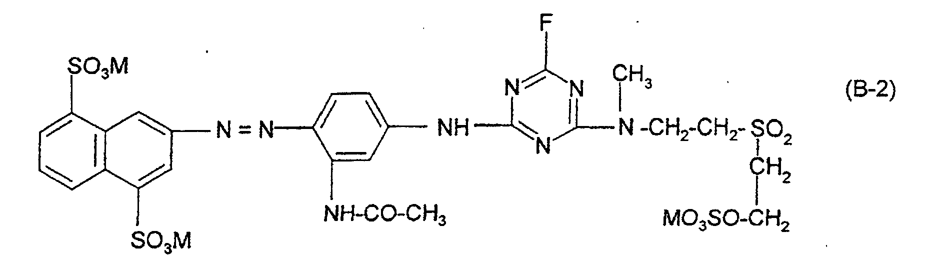 (in welchen M die obengenannte Bedeutung besitzt, bevorzugt Natrium ist) und isoliert die erfindungsgemäße Farbstoffmischung nach Vereinigung der beiden Lösungen in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung mit einem molaren Mischungsverhältnis des Farbstoffes (A-1) zu Farbstoff (B-2) von 50 : 50 zeigt sehr gute färberische Eigenschaften und liefert beispielsweise auf cellulosischen Fasermaterialien, wie Baumwolle, oder Celluloseregeneratfasern, im einen für faserreaktive Farbstoffe üblichen Klotz-Kaltverweil-Verfahren farbstarke und egale gelbe Färbungen.

### Beispiele 3 bis 28

In den nachfolgenden Tabellenbeispielen sind weitere erfindungsgemäße Farbstoffmischungen mit Farbstoffen beschrieben, deren Formeln (mit M der oben angegebenen Bedeutung) im Anschluß an die Tabelle angegeben sind. Die Mischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke gelbe Färbungen und Drucke mit guten Echtheitseigenschaften und einem guten Farbaufbau. In der Rubrik MV wird das molare Mischungsverhältnis der beiden Farbstoffe zueinander in Mol-% angegeben.

| Bsp. | Farbstoff (1) | Farbstoff (2) | MV von (1) : (2) |
|---|---|---|---|
| 3 | Formel (A-1) | Formel (B-3) | 50 : 50 |
| 4 | Formel (A-1) | Formel (B-4) | 40 : 60 |
| 5 | Formel (A-1) | Formel (B-5) | 60 : 40 |
| 6 | Formel (A-1) | Formel (B-6) | 65 : 35 |
| 7 | Formel (A-1) | Formel (B-7) | 50 : 50 |
| 8 | Formel (A-1) | Formel (B-8) | 45 : 55 |
| 9 | Formel (A-1) | Formel (B-9) | 53 : 47 |
| 10 | Formel (A-2) | Formel (B-1) | 50 : 50 |
| 11 | Formel (A-3) | Formel (B-1) | 50 : 50 |
| 12 | Formel (A-4) | Formel (B-1) | 50 : 50 |
| 13 | Formel (A-5) | Formel (B-1) | 52 : 48 |
| 14 | Formel (A-1) | Formel (B-10) | 58 : 42 |
| 15 | Formel (A-1) | Formel (B-11) | 56 : 44 |
| 16 | Formel (A-1) | Formel (B-12) | 53 : 47 |
| 17 | Formel (A-1) | Formel (B-13) | 60 : 40 |
| 18 | Formel (A-1) | Formel (B-14) | 53 : 47 |
| 19 | Formel (A-1) | Formel (B-15) | 52 : 48 |
| 20 | Formel (A-1) | Formel (B-16) | 58 : 42 |
| 21 | Formel (A-1) | Formel (B-17) | 56 : 44 |
| 22 | Formel (A-1) | 40 % Formel (B-11) | 59 : 41 |
| | | 60 % Formel (B-1) | |
| 23 | 70 % Formel (A-1) | Formel (B-18) | 50 : 50 |
| | 30 % Formel (A-6) | | |
| 24 | Formel (A-1) | Formel (B-19) | 50 : 50 |
| 25 | Formel (A-1) | Formel (B-20) | 47 : 53 |
| 26 | Formel (A-1) | Formel (B-21) | 52 : 48 |
| 27 | Formel (A-6) | Formel (B-1) | 56 : 44 |
| 28 | Formel (A-7) | Formel (B-1) | 52 : 48 |

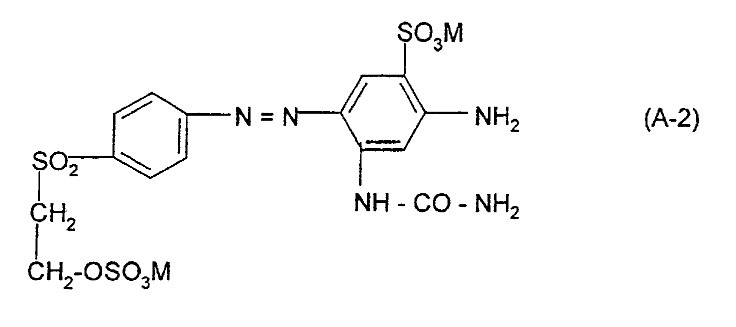

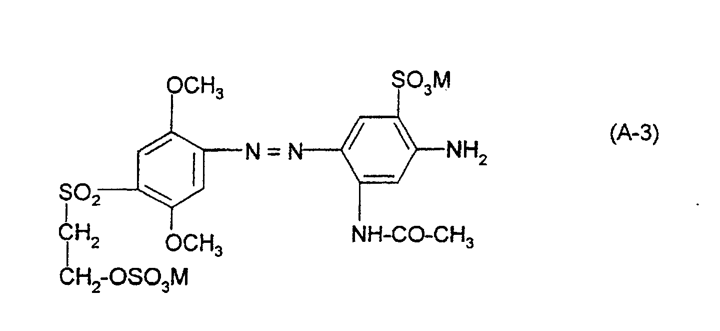

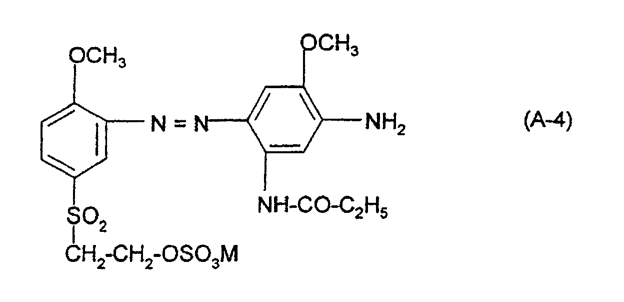

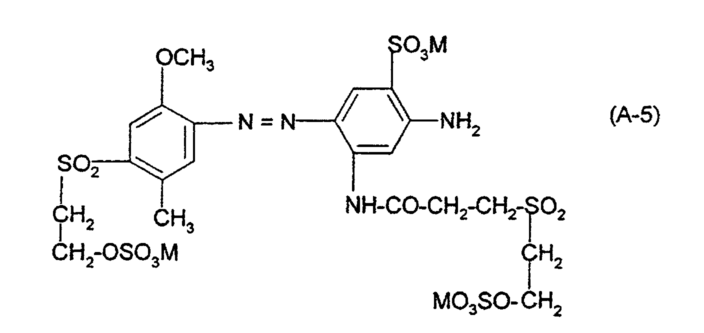

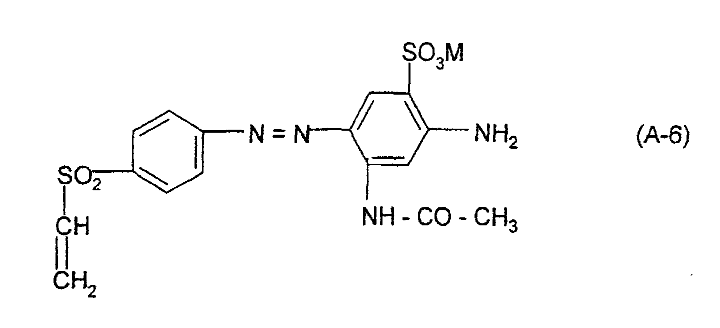

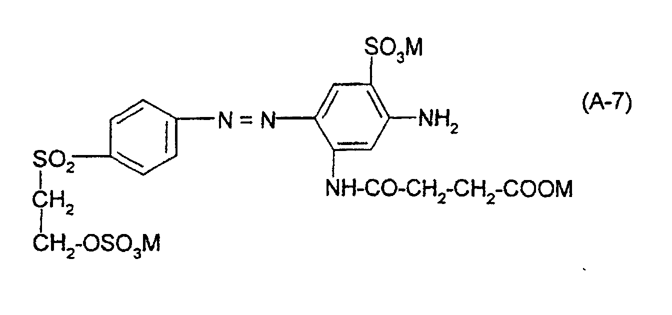

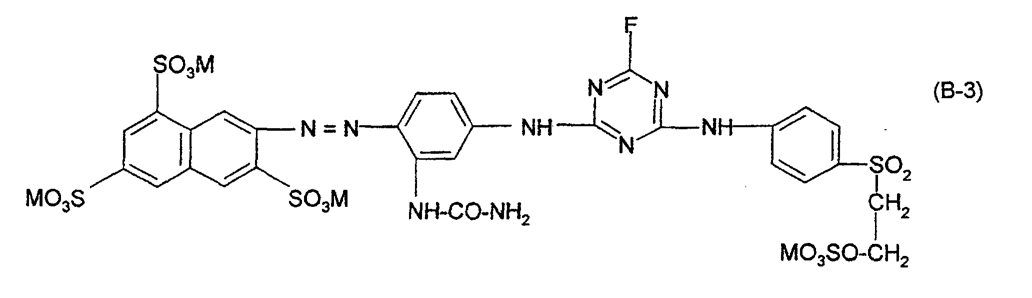

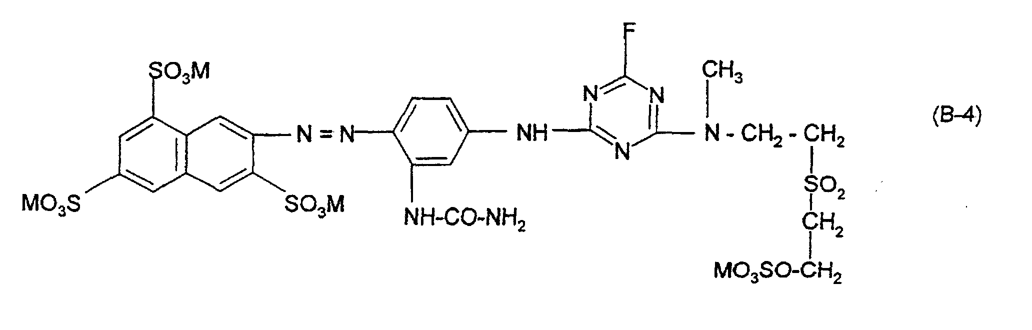

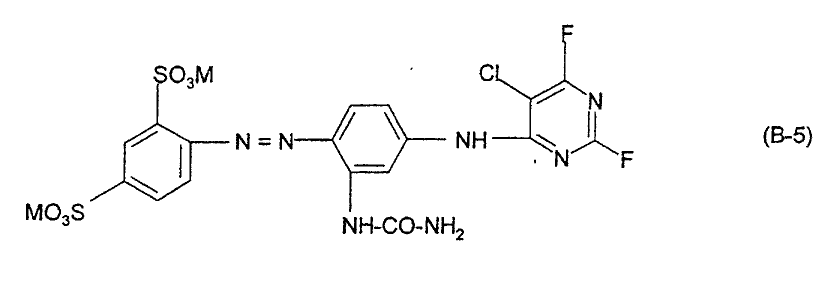

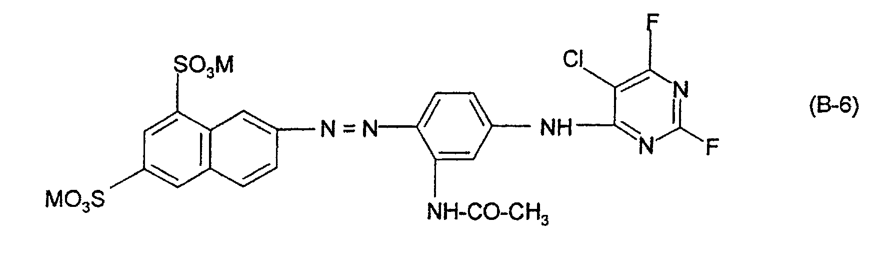

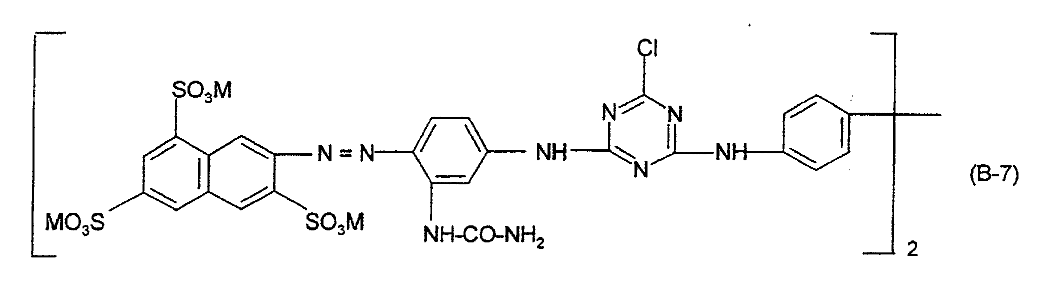

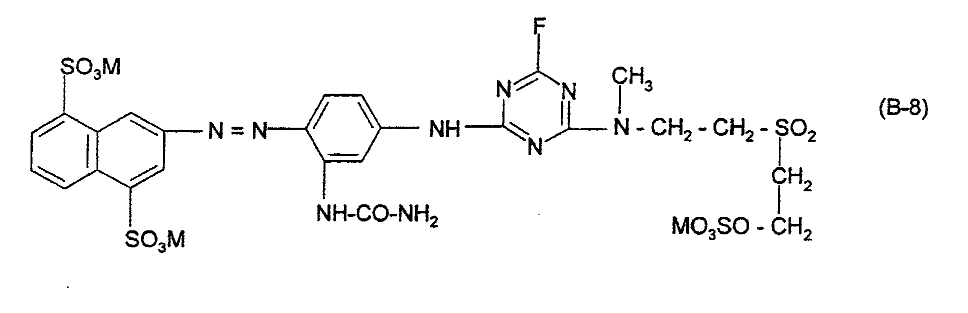

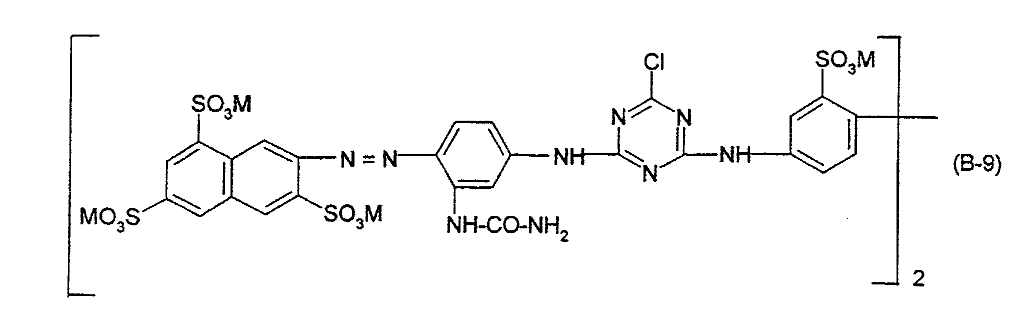

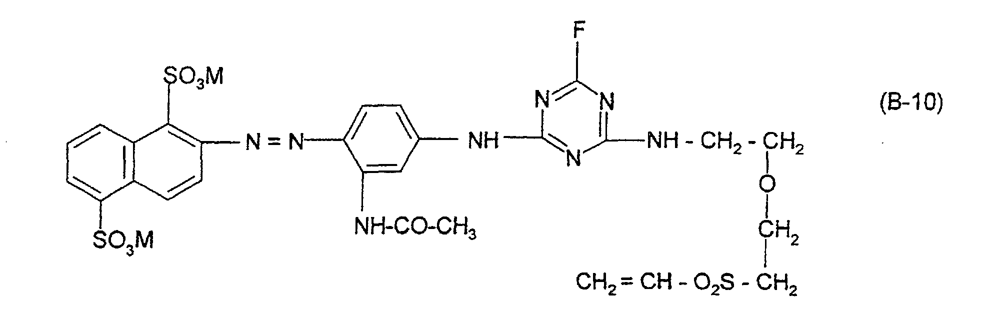

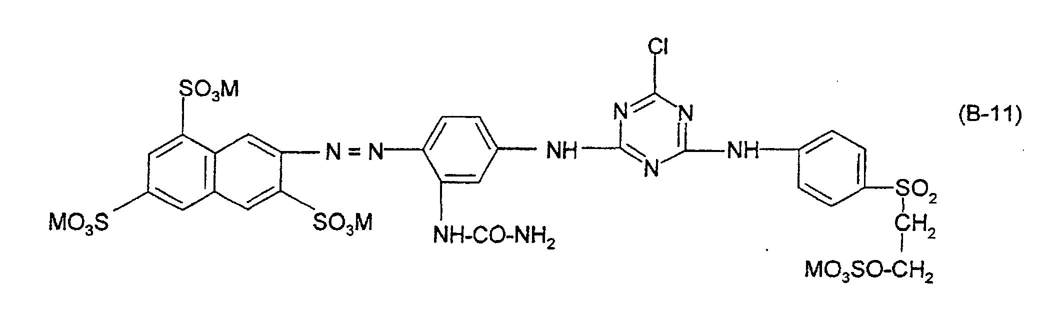

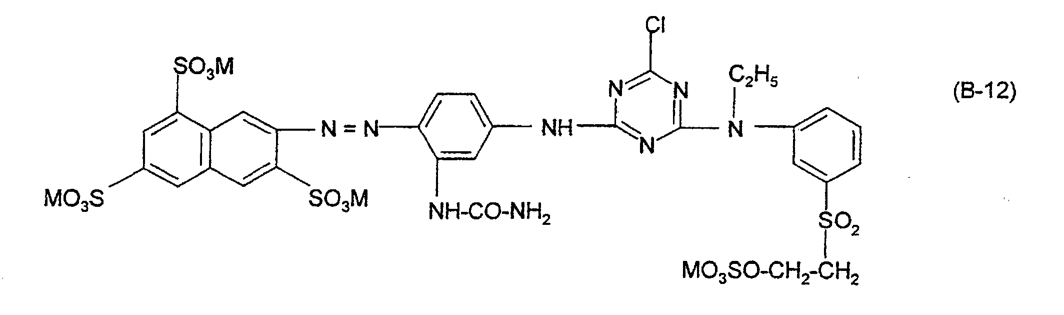

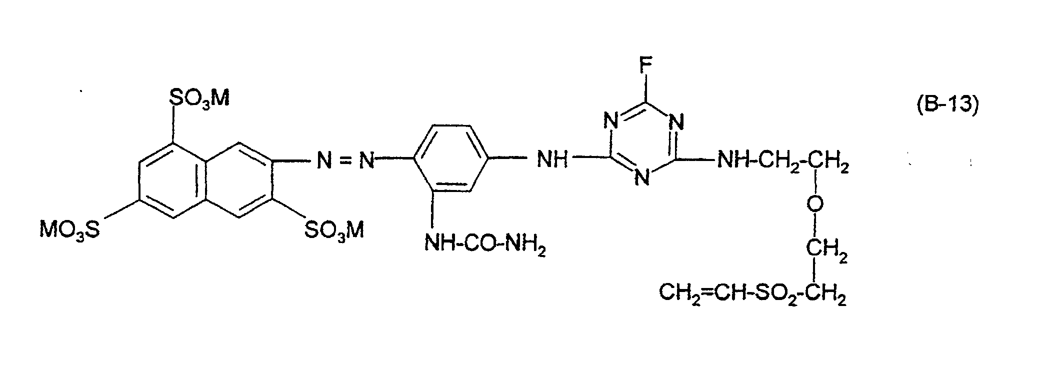

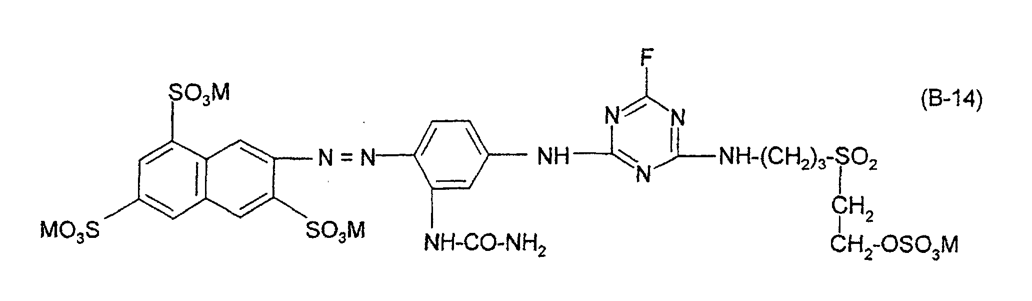

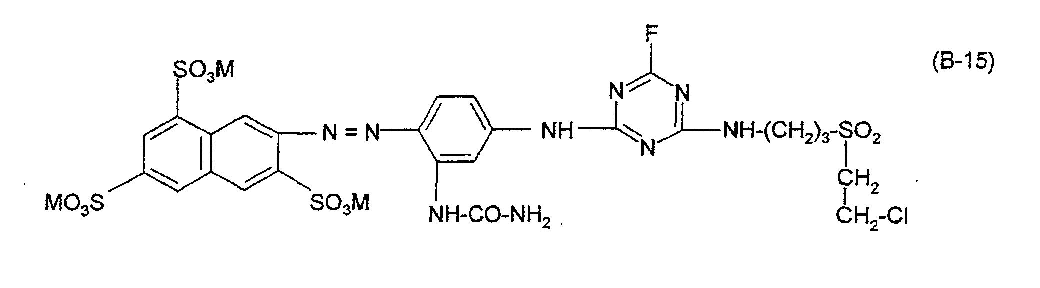

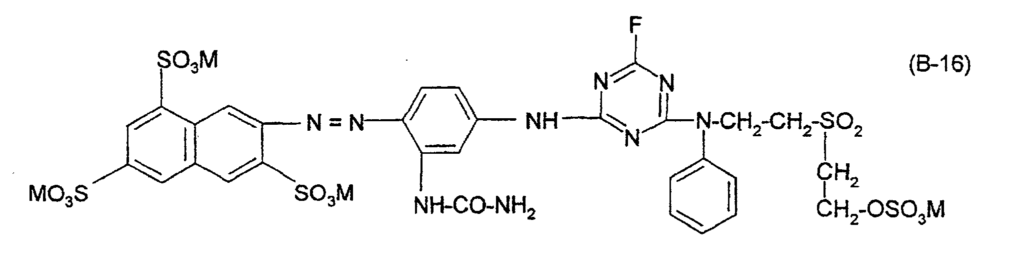

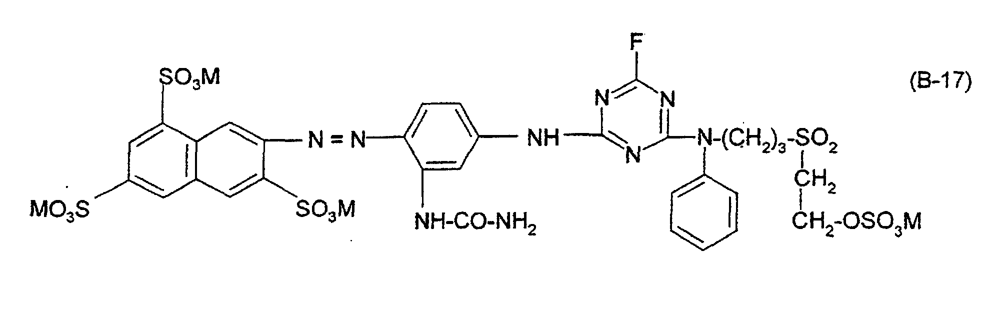

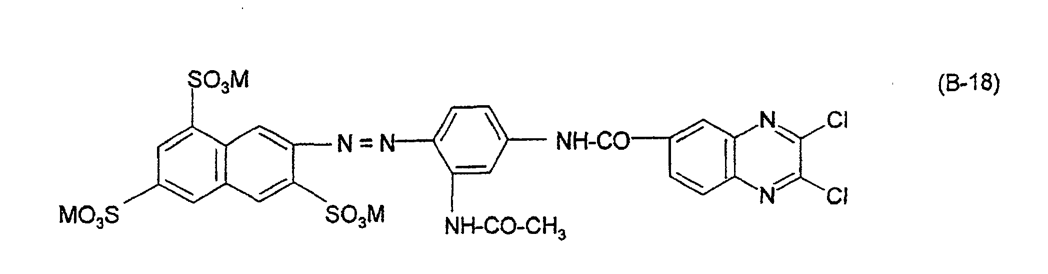

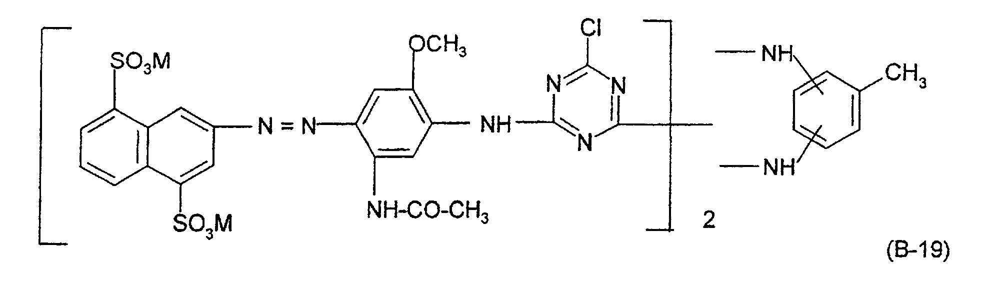

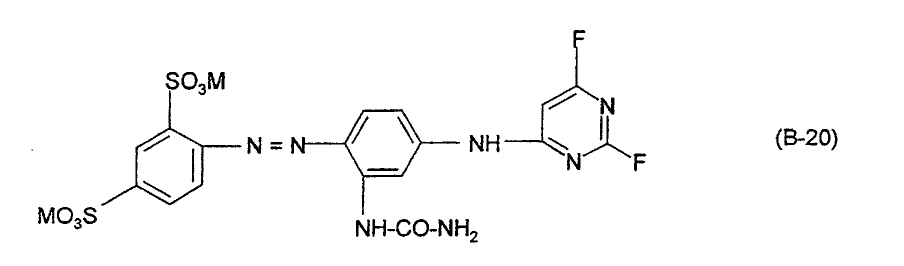

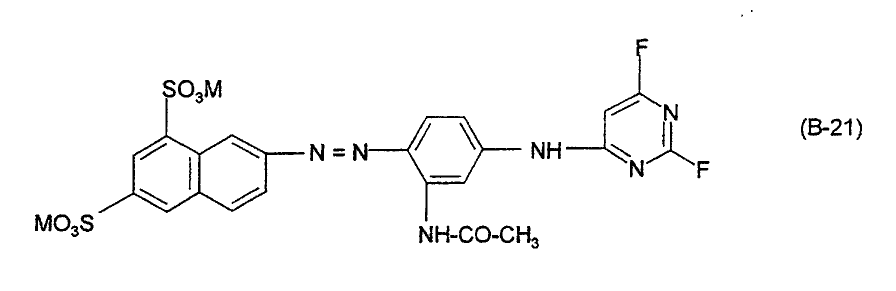

## Patentansprüche

1. Farbstoffmischung, enthaltend einen oder mehrere Farbstoffe der nachstehend angegebenen und definierten allgemeinen Formel (1) und einen oder mehrere Farbstoffe der nachstehend angegebenen und definierten allgemeinen Formel (2a) oder (2b) oder (2a) und (2b) in einem molaren Verhältnis der Farbstoffe (1) zu den Farbstoffen (2a) oder (2b) oder einer Kombination aus den Farbstoffen (2a) und (2b) von 70 : 30 bis 30 : 70 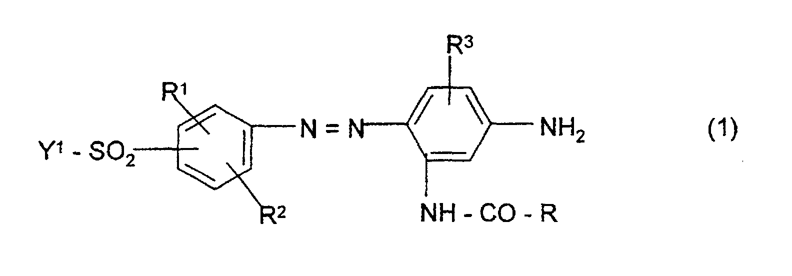 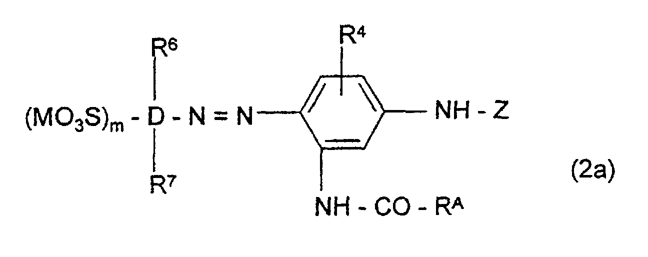 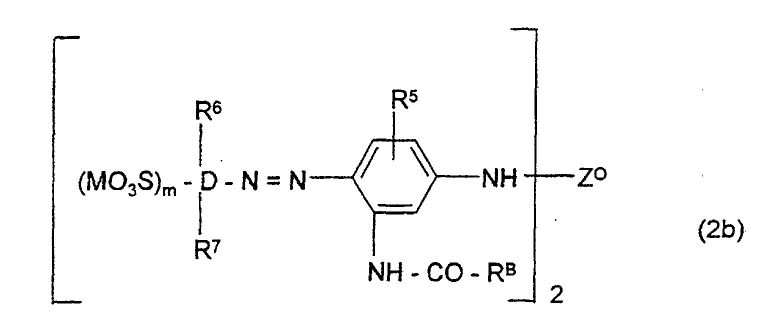 in welchen bedeuten:
M ist Wasserstoff oder ein Alkalimetall;
Y¹ ist Vinyl oder ist Ethyl, das in β-Stellung durch einen alkalisch eliminierbaren Substituenten substituiert ist;
D ist der Rest des Benzols oder Naphthalins;
R¹ ist Wasserstoff, Chlor, Alkyl von 1 bis 4 C-Atomen, Alkoxy von 1 bis 4 C-Atomen oder Sulfo;
R² ist Wasserstoff, Alkyl von 1 bis 4 C-Atomen oder Alkoxy von 1 bis 4 C-Atomen;
R³ ist Wasserstoff, Alkyl von 1 bis 4 C-Atomen, Alkoxy von 1 bis 4 C-Atomen oder Sulfo;
R⁴ ist Wasserstoff, Alkyl von 1 bis 4 C-Atomen, Alkoxy von 1 bis 4 C-Atomen oder Sulfo;
R⁵ ist Wasserstoff, Alkyl von 1 bis 4 C-Atomen, Alkoxy von 1 bis 4 C-Atomen oder Sulfo;
R ist Amino oder Alkyl von 1 bis 6 C-Atomen, das substituiert sein kann;
R^{A} ist Amino oder Alkyl von 1 bis 4 C-Atomen oder durch Carboxy, Sulfo oder eine Gruppe -SO₂-Y³ substituiertes Alkyl von 1 bis 4 C-Atomen, wobei Y³ eine der Bedeutungen von Y¹ hat;
R⁸ ist Amino oder Alkyl von 1 bis 4 C-Atomen oder durch Carboxy, Sulfo oder eine Gruppe -SO₂-Y³ substituiertes Alkyl von 1 bis 4 C-Atomen, wobei Y³ eine der Bedeutungen von Y¹ hat;
R⁶ ist Wasserstoff, Alkyl von 1 bis 4 C-Atomen, Alkoxy von 1 bis 4 C-Atomen, Hydroxy, Halogen, Carboxy oder Cyano;
R⁷ ist Wasserstoff, Alkyl von 1 bis 4 C-Atomen oder Alkoxy von 1 bis 4 C-Atomen;
m ist die Zahl 1, 2 oder 3;
Z ist ein faserreaktiver Rest aus der Reihe der Halogenpyrimidine, der Dichlorchinoxaline oder der gegebenenfalls durch eine Ether-oder Aminogruppierung substituierten Halogentriazine, wobei der Rest des Halogentriazins auch mit einer faserreaktiven Gruppe der allgemeinen Formel -SO₂-Y mit Y gleich einer Bedeutung von Y¹ verbunden sein kann, die über ein Brückenglied an eine an den Triazinrest gebundene Aminogruppe gebunden ist;
Z° ist ein bivalenter Rest der allgemeinen Formel (3) 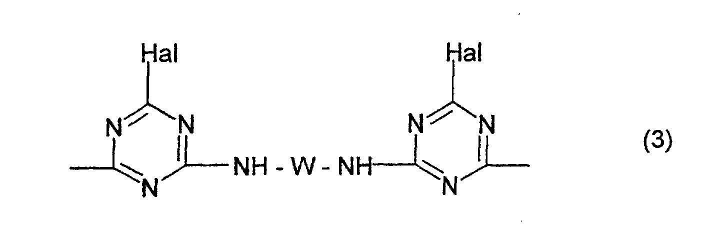
in welcher
Hal für Chlor oder Fluor steht und
W Phenylen, Alkylen, Phenylen-alkylen-phenylen, Phenylen-alkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können, die Alkenylenreste solche von 2 bis 4 C-Atomen sind, phen gleich Phenylen der obigen Bedeutung ist und G eine Gruppe -O-, -NH-, -CO- oder -NH-CO-NH- ist.

2. Farbstoffmischung nach Anspruch 1, **dadurch gekennzeichnet, daß** Z ein Rest der allgemeinen Formel (4c) oder (4d) 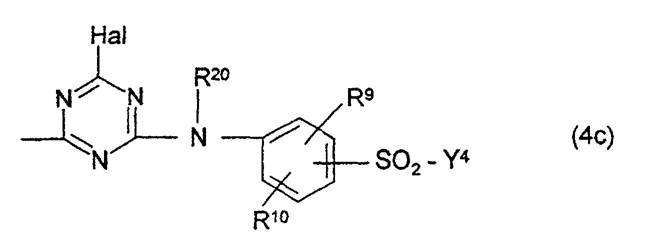 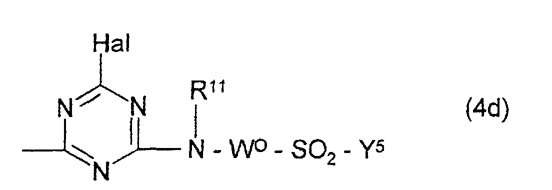 ist, in welchen Hal Chlor oder Fluor ist, R⁹ Wasserstoff, Alkyl von 1 bis 4 C-Atomen oder Alkoxy von 1 bis 4 C-Atomen ist, R¹⁰ Wasserstoff, Alkyl von 1 bis 4 C-Atomen oder Alkoxy von 1 bis 4 C-Atomen ist, R²⁰ Wasserstoff oder Alkyl von 1 bis 4 C-Atomen ist, R¹¹ Wasserstoff, Alkyl von 1 bis 4 C-Atomen, Phenyl oder durch Chlor, Sulfo, Methyl oder Carboxy substituiertes Phenyl ist, Y⁴ Vinyl ist oder Ethyl ist, das in β-Stellung durch einen alkalisch eliminierbaren Substituenten substituiert ist, Y⁵ eine der für Y⁴ genannte Bedeutungen hat und W° Alkylen von 1 bis 4 C-Atomen ist oder Alkylen von 3 bis 6 C-Atomen, das durch 1 oder 2 Heterogruppen aus der Gruppe der Formeln -O- und -NHunterbrochen ist, oder ein Rest der Formel ALK-PHEN oder PHEN-ALK oder PHEN ist, in welchen ALK Methylen, n-Ethylen oder n-Propylen bedeutet und PHEN Phenylen ist, das durch 1 oder 2 Substituenten aus der Gruppe Sulfo, Alkyl von 1 bis 4 C-Atomen und Alkoxy von 1 bis 4 C-Atomen substituiert sein kann.

3. Farbstoffmischung nach Anspruch 1 oder 2, **dadurch gekennzeichnet, daß** R³ in para-Stellung zur Gruppe -NH-CO-R steht.

4. Farbstoffmischung nach mindestens einem der Ansprüche 1 bis 3, **dadurch gekennzeichnet, daß** R¹ Wasserstoff, Methyl oder Methoxy und R² Wasserstoff, Methyl oder Methoxy ist.

5. Farbstoffmischung nach mindestens einem der Ansprüche 1 bis 3, **dadurch gekennzeichnet, daß** R¹ und R² beide Wasserstoff sind.

6. Farbstoffmischung nach mindestens einem der Ansprüche 1 bis 5, **dadurch gekennzeichnet, daß** R Methyl ist.

7. Farbstoffmischung nach mindestens einem der Ansprüche 1 bis 6, **dadurch gekennzeichnet, daß** R⁴ und R⁵ in para-Stellung zur Gruppe -NH-CO-R^{A} bzw. -NH-CO-R^{B} stehen.

8. Farbstoffmischung nach mindestens einem der Ansprüche 1 bis 7, **dadurch gekennzeichnet, daß** R^{A} und R^{B} beide Amino sind.

9. Farbstoffmischung nach mindestens einem der Ansprüche 1 bis 8, **dadurch gekennzeichnet, daß** R⁶ und R⁷ beide Wasserstoff bedeuten.

10. Farbstoffmischung nach mindestens einem der Ansprüche 1 bis 9, **dadurch gekennzeichnet, daß** R⁹ Wasserstoff und R¹⁰ Wasserstoff oder Sulfo bedeuten.

11. Farbstoffmischung nach mindestens einem der Ansprüche 1 bis 10, **dadurch gekennzeichnet, daß** R¹¹ Wasserstoff, Methyl, Ethyl oder Phenyl ist und W° n-Ethylen, n-Propylen oder Alkylen von 3 bis 6 C-Atomen ist, das durch 1 oder 2 Heterogruppen aus der Gruppe der Formeln -O--NH- unterbrochen ist.

12. Farbstoffmischung nach mindestens einem der Ansprüche 1 bis 11, **dadurch gekennzeichnet, daß** Z° ein Rest der allgemeinen Formel (3) 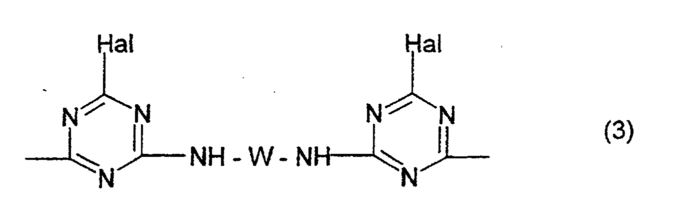 ist, in welchen Hal für Chlor oder Fluor steht und W Phenylen, Alkylen, Phenylen-alkylen-phenylen, Phenylen-alkenylen-phenylen oder Phenylen-phenylen oder ein Rest der allgemeinen Formel phen-G-phen ist, wobei die Phenylenreste durch 1 oder 2 Substituenten aus der Gruppe Methoxy, Ethoxy, Methyl, Ethyl, Sulfo und Carboxy substituiert sein können, die Alkylenreste aus 1 bis 6 C-Atomen bestehen und durch Sulfo oder Carboxy substituiert und/oder durch 1 oder 2 Heterogruppen unterbrochen sein können, die Alkenylenreste solche von 2 bis 4 C-Atomen sind, phen gleich Phenylen der obigen Bedeutung ist und G eine Gruppe -O-, -NH-, -CO- oder -NH-CO-NH- ist.

13. Farbstoffmischung nach mindestens einem der Ansprüche 1 bis 12, **dadurch gekennzeichnet, daß** Y, Y¹, Y², Y³, Y⁴ und Y⁵, jedes unabhängig voneinander, Vinyl, β-Chlorethyl oder β-Sulfatoethyl bedeuten.

14. Farbstoffmischung nach mindestens einem der Ansprüche 1 bis 12, **dadurch gekennzeichnet, daß** Y, Y¹, Y², Y³, Y⁴ und Y⁵, jedes unabhängig voneinander, Vinyl oder β-Sulfatoethyl bedeuten.

15. Farbstoffmischung nach Anspruch 1, **dadurch gekennzeichnet, daß** Z ein Rest der allgemeinen Formel (4b) 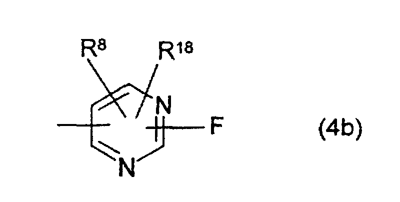 ist, in welcher R⁸ Wasserstoff, Chlor oder Fluor ist und R¹⁸ Wasserstoff oder Fluor bedeutet.

16. Farbstoffmischung nach mindestens einem der Ansprüche 1 bis 15, **dadurch gekennzeichnet, daß** der oder die Farbstoffe (1) und der oder die Farbstoffe (2) in einem molaren Mischungsverhältnis von 60 : 40 bis 40 : 60 vorliegen.

17. Verwendung einer Farbstoffmischung von Anspruch 1 zum Färben von hydroxy- und/oder carbonamidgruppenhaltigem Material, insbesondere Fasermaterial.

18. Verfahren zum Färben von hydroxy- und/oder carbonamidgruppenhaltigem Material, insbesondere Fasermaterial, bei welchem man einen oder mehrere Farbstoffe auf das Material aufbringt und diese auf dem Material mittels Wärme oder mit Hilfe eines alkalisch wirkenden Mittels oder mittels beider Maßnahmen fixiert, **dadurch gekennzeichnet, daß** man als Farbstoffe eine Farbstoffmischung von Anspruch 1 oder eine oder mehrere in Anspruch 1 definierten Farbstoffe (1) und einen oder mehrere der in Anspruch 1 definierten Farbstoffe (2) einzeln zusammen einsetzt.

## Claims

1. A dye mixture comprising one or more dyes of the hereinbelow indicated and defined general formula (1) and one or more dyes of the hereinbelow indicated and defined general formula (2a) or (2b) or (2a) and (2b) in a molar ratio of the dyes (1) to the dyes (2a) or (2b) or a combination of the dyes (2a) and (2b) of 70 : 30 to 30 : 70 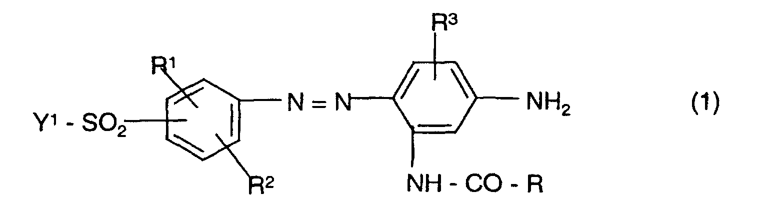 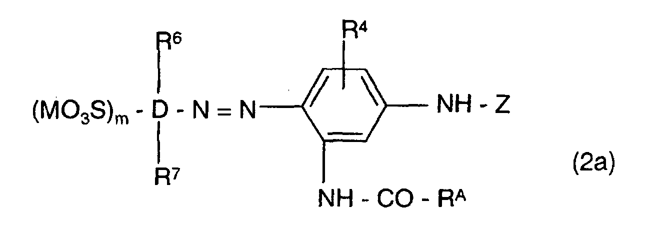 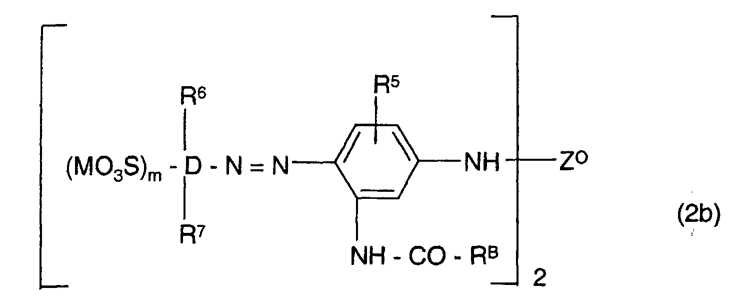 where:
M is hydrogen or an alkali metal;
Y¹ is vinyl or is ethyl which is substituted in the β-position by an alkali-eliminable substituent;
D is a radical of benzene or of naphthalene;
R¹ is hydrogen, chlorine, alkyl of 1 to 4 carbon atoms, alkoxy of 1 to 4 carbon atoms, or sulfo;
R² is hydrogen, alkyl of 1 to 4 carbon atoms or alkoxy of 1 to 4 carbon atoms;
R³ is hydrogen, alkyl of 1 to 4 carbon atoms, alkoxy of 1 to 4 carbon atoms or sulfo;
R⁴ is hydrogen, alkyl of 1 to 4 carbon atoms, alkoxy of 1 to 4 carbon atoms or sulfo;
R⁵ is hydrogen, alkyl of 1 to 4 carbon atoms, alkoxy of 1 to 4 carbon atoms or sulfo;
R is amino or alkyl of 1 to 6 carbon atoms which may be substituted;
R^{A} is amino or alkyl of 1 to 4 carbon atoms or alkyl of 1 to 4 carbon atoms which is substituted by carboxyl, sulfo or a -SO₂-Y³ group, Y³ having one of the meanings of Y¹;
R^{B} is amino or alkyl of 1 to 4 carbon atoms or alkyl of 1 to 4 carbon atoms which is substituted by carboxyl, sulfo or a -SO₂-Y³ group, Y³ having one of the meanings of Y¹;
R⁶ is hydrogen, alkyl of 1 to 4 carbon atoms, alkoxy of 1 to 4 carbon atoms, hydroxyl, halogen, carboxyl or cyano;
R⁷ is hydrogen, alkyl of 1 to 4 carbon atoms or alkoxy of 1 to 4 carbon atoms;
m is 1, 2 or 3;
Z is a fiber-reactive radical selected from the group of the halopyrimidines, of the dichloroquinoxalines or of the halotriazines which are optionally substituted by an ether or amino grouping, where the radical of the halotriazine can also be bonded to a fiber-reactive group of the general formula -SO₂-Y, Y having one of the meanings of Y¹, which group is attached via a bridge member to an amino group attached to the triazine radical;
Z^{O} is a bivalent radical of the general formula (3) 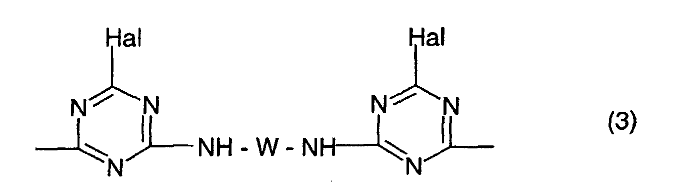
where
Hal is chlorine or fluorine, and
W is phenylene, alkylene, phenylene-alkylene-phenylene, phenylene-alkenylene-phenylene or phenylene-phenylene or a radical of the general formula phen-G-phen, where the phenylene radicals may be substituted by 1 or 2 substituents selected from the group consisting of methoxy, ethoxy, methyl, ethyl, sulfo and carboxyl, the alkylene radicals contain 1 to 6 carbon atoms and may be substituted by sulfo or carboxyl and/or interrupted by 1 or 2 hetero groups, and the alkenylene radicals are those of 2 to 4 carbon atoms, and where phen is equal to phenylene of the above definition and G is -O-, -NH-, -CO- or -NH-CO-NH-.

2. A dye mixture as claimed in claim 1, wherein Z is a radical of the general formula (4c) or (4d) 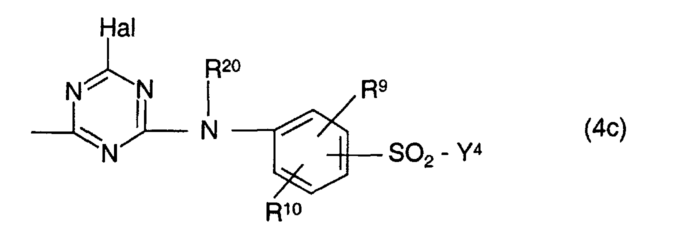 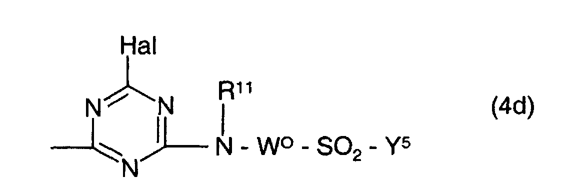 where Hal is chlorine or fluorine, R⁹ is hydrogen, alkyl of 1 to 4 carbon atoms or alkoxy of 1 to 4 carbon atoms, R¹⁰ is hydrogen, alkyl of 1 to 4 carbon atoms or alkoxy of 1 to 4 carbon atoms, R²⁰ is hydrogen or alkyl of 1 to 4 carbon atoms, R¹¹ is hydrogen, alkyl of 1 to 4 carbon atoms, phenyl or chlorine-, sulfo-, methyl- or carboxyl--substituted phenyl, Y⁴ is vinyl or is ethyl which is substituted in the β-position by an alkali-eliminable substituent, Y⁵ is Y⁴ and W^{O} is alkylene of 1 to 4 carbon atoms or alkylene of 3 to 6 carbon atoms which is interrupted by 1 or 2 hetero groups selected from the group consisting of -0-and -NH- or is a radical of the formula ALK-PHEN or PHEN-ALK or PHEN where ALK is methylene, n-ethylene or n-propylene and PHEN is phenylene which may be substituted by 1 or 2 substituents selected from the group consisting of sulfo, alkyl of 1 to 4 carbon atoms and alkoxy of 1 to 4 carbon atoms.

3. A dye mixture as claimed in claim 1 or 2, wherein R³ is disposed para to the -NH-CO-R group.

4. A dye mixture as claimed in at least one of claims 1 to 3, wherein R¹ is hydrogen, methyl or methoxy and R² is hydrogen, methyl or methoxy.

5. A dye mixture as claimed in at least one of claims 1 to 3, wherein R¹ and R² are both hydrogen.

6. A dye mixture as claimed in at least one of claims 1 to 5, wherein R is methyl.

7. A dye mixture as claimed in at least one of claims 1 to 6, wherein R⁴ and R⁵ are disposed para to -NH-CO-R^{A} and -NH-CO-R^{B}, respectively.

8. A dye mixture as claimed in at least one of claims 1 to 7, wherein R^{A} and R^{B} are both amino.

9. A dye mixture as claimed in at least one of claims 1 to 8, wherein R⁶ and R⁷ are both hydrogen.

10. A dye mixture as claimed in at least one of claims 1 to 9, wherein R⁹ is hydrogen and R¹⁰ is hydrogen or sulfo.

11. A dye mixture as claimed in at least one of claims 1 to 10, wherein R¹¹ is hydrogen, methyl, ethyl or phenyl and W^{O} is n-ethylene, n-propylene or alkylene of 3 to 6 carbon atoms which is interrupted by 1 or 2 hetero groups selected from the group consisting of -O- and -NH-.

12. A dye mixture as claimed in at least one of claims 1 to 11, wherein Z^{O} is a radical of the general formula (3) 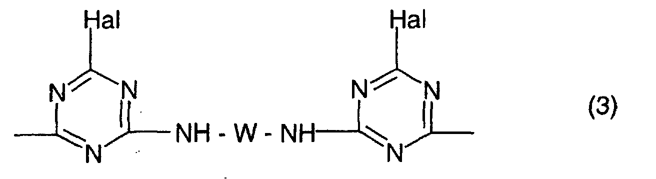 where Hal is chlorine or fluorine and W is phenylene, alkylene, phenylene-alkylene-phenylene, phenylene-alkenylene-phenylene or phenylene-phenylene or a radical of the general formula phen-G-phen, where the phenylene radicals may be substituted by 1 or 2 substituents selected from the group consisting of methoxy, ethoxy, methyl, ethyl, sulfo and carboxyl, the alkylene radicals contain 1 to 6 carbon atoms and may be substituted by sulfo or carboxyl and/or interrupted by 1 or 2 hetero groups and the alkenylene radicals are those of 2 to 4 carbon atoms and where phen is equal to phenylene of the above definition and G is an -O- , -NH- , -CO- or -NH-CO-NH- group.

13. A dye mixture as claimed in at least one of claims 1 to 12, wherein Y, Y¹, Y², Y³, Y⁴ and Y⁵ are each independently vinyl, β-chloroethyl or β-sulfatoethyl.

14. A dye mixture as claimed in at least one of claims 1 to 12, wherein Y, Y¹, Y², Y³, Y⁴ and Y⁵ are each independently vinyl or β-sulfatoethyl.

15. A dye mixture as claimed in claim 1, wherein Z is a radical of the general formula (4b) 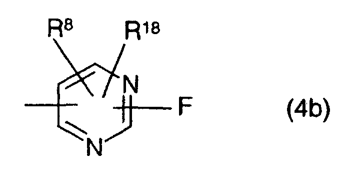 where R⁸ is hydrogen, chlorine or fluorine and R¹⁸ is hydrogen or fluorine.

16. A dye mixture as claimed in at least one of claims 1 to 15, wherein the dye or dyes (1) and the dye or dyes (2) are present in a molar mixing ratio of 60 : 40 to 40 : 60.

17. The use of a dye mixture of claim 1 for dyeing hydroxyl- and/or carboxamido-containing material, especially fiber material.

18. A process for dyeing hydroxyl- and/or carboxamido-containing material, especially fiber material, by applying one or more dyes to the material and fixing them on the material by means of heat or with the aid of an alkaline agent or by means of both measures, which comprises using as dyes a dye mixture of claim 1 or one or more dyes (1) defined in claim 1 and one or more dyes (2) defined in claim 1 individually together.

## Revendications

1. Mélange de colorants, contenant un ou plusieurs colorants de formule générale (1) indiquée et définie ci-après et un ou plusieurs colorants de formules générales (2a) ou (2b) ou (2a) et (2b) indiquées et définies ci-après, en un rapport molaire des colorants (1) aux colorants (2a) ou (2b) ou à une association des colorants (2a) et (2b) de 70:30 à 30:70 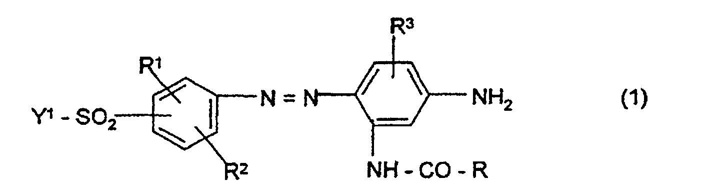 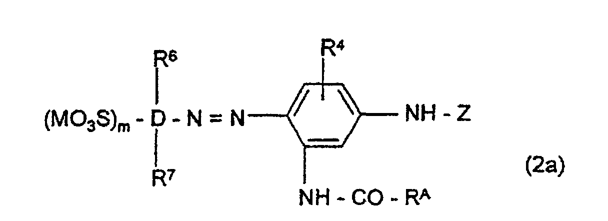 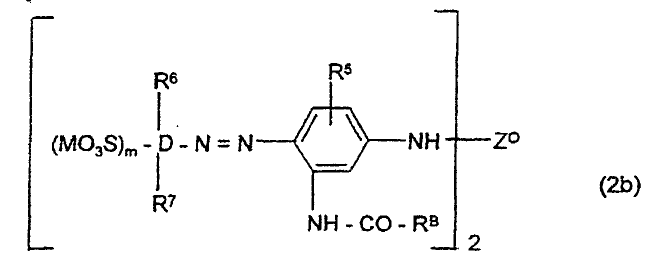 formules dans lesquelles :
M représente un atome d'hydrogène ou un métal alcalin ;
Y¹ est le groupe vinyle ou éthyle, qui porte en position β un substituant pouvant être éliminé par voie alcaline ;
D est le reste du benzène ou du naphtalène ;
R¹ est un atome d'hydrogène ou de chlore ou un groupe alkyle ayant de 1 à 4 atomes de carbone, alcoxy ayant de 1 à 4 atomes de carbone ou sulfo ;
R² est un atome d'hydrogène ou un groupe alkyle ayant de 1 à 4 atomes de carbone ou alcoxy ayant de 1 à 4 atomes de carbone ;
R³ est un atome d'hydrogène ou un groupe alkyle ayant de 1 à 4 atomes de carbone, alcoxy ayant de 1 à 4 atomes de carbone ou sulfo ;
R⁴ est un atome d'hydrogène ou un groupe alkyle ayant de 1 à 4 atomes de carbone, alcoxy ayant de 1 à 4 atomes de carbone ou sulfo ;
R⁵ est un atome d'hydrogène ou un groupe alkyle ayant de 1 à 4 atomes de carbone, alcoxy ayant de 1 à 4 atomes de carbone ou sulfo ;
R est un groupe amino ou alkyle ayant de 1 à 6 atomes de carbone, qui peut être substitué ;
R^{A} est un groupe amino ou alkyle ayant de 1 à 4 atomes de carbone, ou un groupe alkyle ayant de 1 à 4 atomes de carbone, substitué par un groupe carboxy, sulfo ou par un groupe -SO₂-Y³, Y³ ayant l'une des significations de Y¹ ;
R^{B} est un groupe amino ou alkyle ayant de 1 à 4 atomes de carbone, ou un groupe alkyle ayant de 1 à 4 atomes de carbone, substitué par un groupe carboxy, sulfo ou par un groupe -SO₂-Y³, Y³ ayant l'une des significations de Y¹ ;
R⁶ est un atome d'hydrogène ou d'halogène ou un groupe alkyle ayant de 1 à 4 atomes de carbone, alcoxy ayant de 1 à 4 atomes de carbone, hydroxy, carboxy ou cyano ;
R⁷ est un atome d'hydrogène ou un groupe alkyle ayant de 1 à 4 atomes de carbone ou alcoxy ayant de 1 à 4 atomes de carbone ;
m est le nombre 1, 2 ou 3 ;
Z est un reste réactif avec les fibres, de la série des halogénopyrimidines, des dichloroquinoxalines ou des halogénotriazines éventuellement substituées par un groupement éther ou amino, le reste de l'halogénotriazine pouvant également être lié à un groupe réactif avec les fibres, de formule générale -SO₂-Y, où Y a une signification de Y¹, qui est relié par un chaînon pontant à un groupe amino lié au reste triazine ;
Z° est un reste bivalent de formule générale (3) 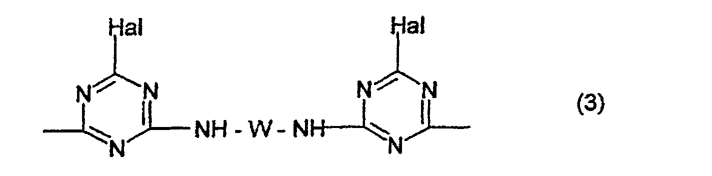
dans laquelle
Hal représente le chlore ou le fluor et
W représente un radical phénylène, alkylène, phénylène-alkylène-phénylène, phénylène-alcénylène-phénylène ou phénylène-phénylène, ou un radical de formule générale phén-G-phén, les radicaux phénylène pouvant porter 1 ou 2 substituants choisis parmi les groupes méthoxy, éthoxy, méthyle, éthyle, sulfo et carboxy, les radicaux alkylène consistant en 1 à 6 atomes de carbone et pouvant être substitués par le groupe sulfo ou carboxy et/ou être interrompus par 1 ou 2 hétérogroupes, les radicaux alcénylène étant ceux ayant de 2 à 4 atomes de carbone, phén étant le radical phénylène ayant la signification donnée plus haut et G étant un groupe -O-, -NH-, -CO- ou -NH-CO-NH-.

2. Mélange de colorants selon la revendication 1, **caractérisé en ce que** Z est un radical de formule générale (4c) ou (4d) 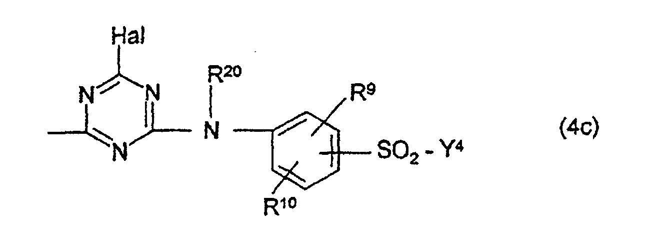 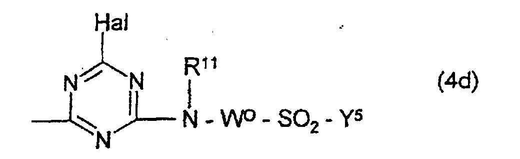 formules dans lesquelles Hal est le chlore ou le fluor, R⁹ est un atome d'hydrogène, un groupe alkyle ayant de 1 à 4 atomes de carbone ou alcoxy ayant de 1 à 4 atomes de carbone, R¹⁰ est un atome d'hydrogène, un groupe alkyle ayant de 1 à 4 atomes de carbone ou alcoxy ayant de 1 à 4 atomes de carbone, R²⁰ est un atome d'hydrogène ou un groupe alkyle ayant de 1 à 4 atomes de carbone, R¹¹ est un atome d'hydrogène, un groupe alkyle ayant de 1 à 4 atomes de carbone, le groupe phényle ou un groupe phényle substitué par un atome de chlore ou par le groupe sulfo, méthyle ou carboxy, Y⁴ est un groupe vinyle ou éthyle qui porte en position β un substituant pouvant être éliminé par voie alcaline, Y⁵ a l'une des significations données pour Y⁴, et W^{o} est un groupe alkylène ayant de 1 à 4 atomes de carbone ou un groupe alkylène ayant de 3 à 6 atomes de carbone, qui est interrompu par 1 ou 2 hétérogroupes choisis parmi ceux de formules -O- et -NH-, ou un radical de formule ALK-PHEN ou PHEN-ALK ou PHEN, dans lequel ALK signifie le groupe méthylène, n-éthylène ou n-propylène et PHEN est le groupe phénylène qui peut porter 1 ou 2 substituants choisis parmi les groupes sulfo, alkyle ayant de 1 à 4 atomes de carbone et alcoxy ayant de 1 à 4 atomes de carbone.

3. Mélange de colorants selon la revendication 1 ou 2, **caractérisé en ce que** R³ est en position para par rapport au groupe -NH-CO-R.

4. Mélange de colorants selon au moins l'une des revendications 1 à 3, **caractérisé en ce que** R¹ est un atome d'hydrogène, le groupe méthyle ou méthoxy, et R² est un atome d'hydrogène, le groupe méthyle ou méthoxy.

5. Mélange de colorants selon au moins l'une des revendications 1 à 3, **caractérisé en ce que** R¹ et R² représentent l'un et l'autre un atome d'hydrogène.

6. Mélange de colorants selon au moins l'une des revendications 1 à 5, **caractérisé en ce que** R est le groupe méthyle.

7. Mélange de colorants selon au moins l'une des revendications 1 à 6, **caractérisé en ce que** R⁴ et R⁵ sont en position para par rapport au groupe -NH-CO-R^{A} ou -NH-CO-R^{B}.

8. Mélange de colorants selon au moins l'une des revendications 1 à 7, **caractérisé en ce que** R^{A} et R^{B} représentent l'un et l'autre le groupe amino.

9. Mélange de colorants selon au moins l'une des revendications 1 à 8, **caractérisé en ce que** R⁶ et R⁷ représentent l'un et l'autre un atome d'hydrogène.

10. Mélange de colorants selon au moins l'une des revendications 1 à 9, **caractérisé en ce que** R⁹ représente un atome d'hydrogène et R¹⁰ représente un atome d'hydrogène ou le groupe sulfo.

11. Mélange de colorants selon au moins l'une des revendications 1 à 10, **caractérisé en ce que** R¹¹ est un atome d'hydrogène ou le groupe méthyle, éthyle ou phényle, et W^{o} est un groupe n-éthylène, n-propylène ou alkylène ayant de 3 à 6 atomes de carbone, qui est interrompu par 1 ou 2 hétérogroupes choisis parmi ceux de formules -O- et -NH-.

12. Mélange de colorants selon au moins l'une des revendications 1 à 11, **caractérisé en ce que** Z° est un radical de formule générale (3) 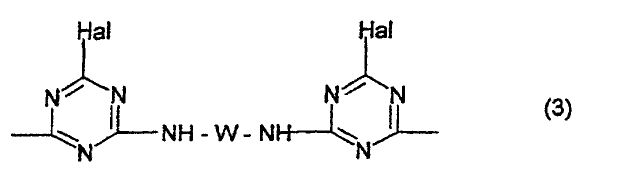 dans laquelle Hal représente le chlore ou le fluor et W est un groupe phénylène, alkylène, phénylène-alkylène-phénylène, phénylène-alcénylène-phénylène ou phénylène-phénylène ou un radical de formule générale phén-G-phén, les radicaux phénylène pouvant porter 1 ou 2 substituants choisis parmi les groupes méthoxy, éthoxy, méthyle, éthyle, sulfo et carboxy, les radicaux alkylène consistant en 1 à 6 atomes de carbone et pouvant être substitués par le groupe sulfo ou carboxy et/ou être interrompus par 1 ou 2 hétérogroupes, les radicaux alcénylène étant ceux ayant de 2 à 4 atomes de carbone, phén désignant un groupe phénylène ayant la signification donnée plus haut et G étant un groupe -O-, -NH-, -CO- ou -NH-CO-NH-.

13. Mélange de colorants selon au moins l'une des revendications 1 à 12, **caractérisé en ce que** Y, Y¹, Y², Y³, Y⁴ et Y⁵ représentent chacun, indépendamment les uns des autres, le groupe vinyle, β-chloréthyle ou β-sulfatoéthyle.

14. Mélange de colorants selon au moins l'une des revendications 1 à 12, **caractérisé en ce que** Y, Y¹, Y², Y³, Y⁴ et Y⁵ représentent chacun, indépendamment les uns des autres, le groupe vinyle ou β-sulfatoéthyle.

15. Mélange de colorants selon la revendication 1, **caractérisé en ce que** Z est un radical de formule générale (4b) 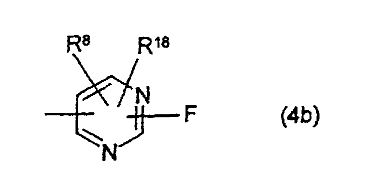 dans laquelle R⁸ est un atome d'hydrogène, de chlore ou de fluor, et R¹⁸ est un atome d'hydrogène ou de fluor.

16. Mélange de colorants selon au moins l'une des revendications 1 à 15, **caractérisé en ce que** le ou les colorants (1) et le ou les colorants (2) se trouvent en un rapport molaire de mélange allant de 60:40 à 40:60.

17. Utilisation d'un mélange de colorants selon la revendication 1, pour la teinture d'un matériau, en particulier d'un matériau fibreux, contenant des groupes hydroxy et/ou carbamoyle.

18. Procédé pour la teinture d'un matériau, en particulier d'un matériau fibreux, contenant des groupes hydroxy et/ou carbamoyle, dans lequel on applique sur le matériau un ou plusieurs colorants et on le(s) fixe sur le matériau au moyen de chaleur ou à l'aide d'un agent à action alcaline ou à l'aide de ces deux moyens, **caractérisé en ce qu'**on utilise comme colorants un mélange de colorants de la revendication 1 ou conjointement, individuellement, un ou plusieurs colorants (1) définis dans la revendication 1 et un ou plusieurs des colorants (2) définis dans la revendication 1.
